Europäisches Patentamt

European Patent Office

Office européen des brevets

(11) Publication number: 0 259 004
A1

## (12) EUROPEAN PATENT APPLICATION

(21) Application number: 87306776.3

(22) Date of filing: 30.07.87

(51) Int. Cl.4: **H04N 7/12** , H04N 11/08

The title of the invention has been amended (Guidelines for Examination in the EPO, A-III, 7.3).

(30) Priority: 01.08.86 GB 8618912

(43) Date of publication of application:
09.03.88 Bulletin 88/10

(84) Designated Contracting States:
AT BE CH DE ES FR GB GR IT LI LU NL SE

(71) Applicant: BRITISH TELECOMMUNICATIONS plc
British Telecom Centre 81 Newgate Street
London EC1A 7AJ(GB)

(72) Inventor: Dobbie, William Hislop
Alton Alton Hall Lane
Sutton Suffolk(GB)

(74) Representative: Lloyd, Barry George William et al
Intellectual Property Unit British Telecom
Room 1304 151 Gower Street
London WC1E 6BA(GB)

(54) Television transmission apparatus.

(57) A television signal is subsampled by omission of alternate samples, or more preferably pairs of samples in each line, the omitted sample or pairs lying above or below the omitted samples or pairs of adjacent lines. A signal for analogue transmission formed is by samples or pairs of a line alternating with pairs or samples of an adjacent line. An interpolation control signal is sent to control the sense of interpolation for estimating the omitted samples at a receiver.

EP 0 259 004 A1

Fig.6.

## TELEVISION TRANSMISSION

The present invention concerns television systems employing sub-sampling in order to reduce the amount of information to be transmitted. Assuming the video signal to be sampled horizontally as well as vertically it is common to omit a proportion of the samples at the transmitter and regenerate them by interpolation at the receiver.

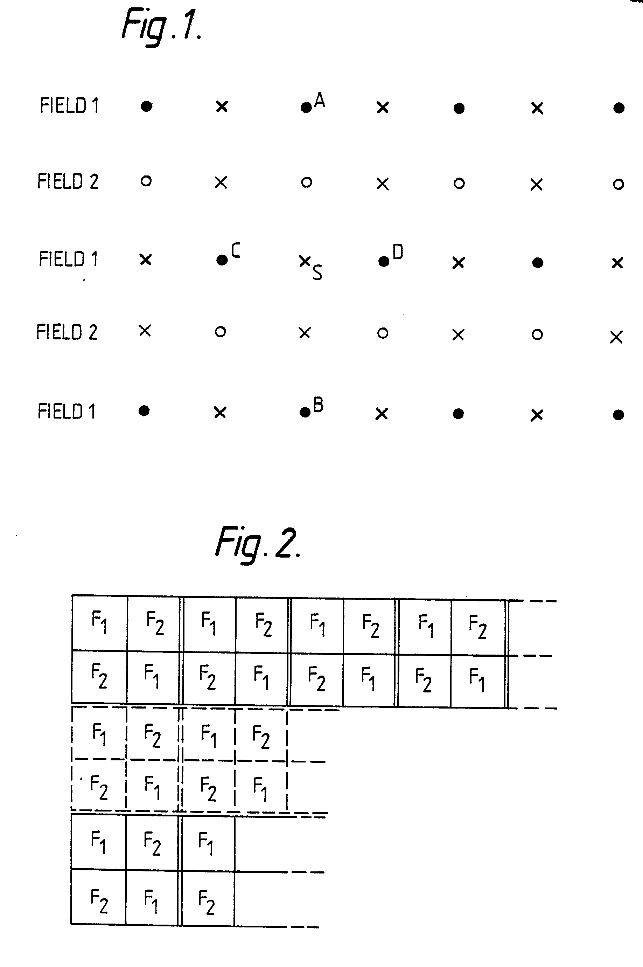

One proposal for sub-sampling is described in G A Reitmeier and R A Dischert, 'A Multiplexed Nyquist Region Approach for High Quality 2:1:1 Digital Video', Proceedings 13th International TV Symposium, Montreux, May 1983, pp 400-408. There, alternate samples in the horizontal direction are omitted, the omitted samples in each line of a field being arranged to lie below the non-omitted samples of the preceding line. This has been referred to as "quincunx" sampling and is illustrated in Figure 1, where heavy crosses and solid circles illustrate respectively the omitted and non-omitted samples within one field (odd or even) of a 2:1 interlaced system. The samples for the other (even or odd) field are similarly indicated by light crosses and open circles. An omitted sample S may be regenerated at the receiver by interpolation from adjacent non-omitted samples A, B, C, D.

It has also been proposed in the above-mentioned paper to employ adaptive interpolation where, for each sample deleted, a control bit is transmitted to control the interpolation process in the receiver so that for example the "recovered" sample is either (A + B)/2 or (C + D)/2, the selection being made to give the minimum error compared with the original sample value. A digital codec employing this technique has been described in J Sabatier, G Aguille, J-C Jolivet, H LeBloch, A Riou, 'Coding System for 34Mbit/s Digital Transmission of Colour Television', Commutation and Transmission, No 1, 1982, pp 69-82.

A proposal for implementing this kind of sampling in a system employing analogue transmission is discussed in K.H. Powers, "Compatibility Aspects of HDTV", HDTV Colloquium, October 1982, Ottawa. Powers proposes a high definition system having twice the vertical and horizontal resolution of a standard system. It has 2:1 interlace in which pairs of adjacent lines on even fields are interlaced with line pairs of the odd fields. Samples or sub-pixels are shown in Figure 2 as blocks of four corresponding to one standard resolution pixel; alternate samples F1 within the first line are interleaved with offset alternate samples F1 of the line below, (ie equivalent to a zig-zag scan). A similar interleaved sequence is generated from the remaining samples F2. The samples F1 are transmitted on a first double-bandwidth channel and samples F2 on a second. A standard definition receiver receives only F1 and averages the sub-pixels whilst a high definition receiver receives both and selects alternate samples from two line stores. Alternatively the F1 and F2 sequences may be sent on a single channel, in alternate frames; the manner is which such a transmission may be decoded is not disclosed.

Thus the signal on one channel is either filtered to produce a standard definition signal or re-combined with the signal on the other channel to produce a full high definition picture signal.

The object of interleaving samples in that case is to provide compatible reception by lower definition receivers. However, the present inventor has recognised that interleaving may be of value in the implementation of sub-sampling in single-standard analogue systems. In digital systems the sequence of transmission is immaterial, whereas in analogue systems the sequence markedly influences the effect of transmission channel bandwidth restrictions.

According to one aspect of the present invention there is provided a television transmission apparatus comprising means operable to omit alternate samples in each line of a field, the omitted samples of each line lying vertically above or below the non-omitted samples of the immediately adjacent lines, and generate an analogue signal consisting of the samples from a line alternating with samples of an adjacent line, and means responsive to each omitted sample and samples spatially adjacent thereto to generate an interpolation control signal.

The interleaved (zig-zag) scan is advantagous compared with horizontal subsampling. An original signal of nominal banwidth of f sampled at a rate 2f and subjected to horizontal subsampling will be subject to horizontal aliasing unless prefiltering is used to reduce the horizontal resolution to one-half. The zig-zag option is more acceptable because of the relatively high correlation of information on adjacent lines; if the lines are identical, no aliasing or loss of resolution occurs.

The two lines can be transmitted, without reducing the baseband bandwidth, in the time of one line over a channel of bandwidth f, or in the time of two over a channel of a bandwidth f/2.

The aliasing which would occur if fixed interpolation were used can be reduced by transmitting an adaptive interpolation control signal. This is then used at the receiver to adaptively control the sense of the interpolation (or post-filtering) process to use vertically or horizontally adjacent samples and so minimise the interpolation error. A certain amount of diagonal aliasing would still occur. One way of avoiding this would be to use a diagonal pre-filter, but extra control information could be transmitted to instruct the receiver to implement right or left diagonal interpolation.

Sample sequences generated in this way need filtering in order to avoid visible aliasing due to the sampling structure (ie patterning at the sampling frequency). One difficulty with this is that strong horizontal edges cause a large component at half the sampling frequency f/2; on the other hand, Nyquist states that to avoid aliasing, a filter with a cut-off at f/2 is necessary, thereby severely attenuating this component and causing substantial interline crosstalk - ie blurring of horizontal edges. Selection of a compromise filter characteristic may however provide an acceptable combination of aliasing and horizontal edge degradation.

Where this is not acceptable, or where further high-frequency attenuation in the transmission channel itself is expected to cause loss of the f/2 components, an alternative solution may be adopted.

In another aspect, therefore, the invention provides a television transmission apparatus including subsampling means operable to omit alternate pairs of consecutive picture samples in each line of a field, the omitted samples of each line being vertically above or below the non-omitted samples of the immediately adjacent line(s).

Again, the transmitter may be arranged to generate an analogue signal consisting of the pairs of samples from a line alternating with pairs of samples of an adjacent line and may include means responsive to each omitted pair of samples and samples spatially adjacent thereto to generate an interpolation control signal.

In a further aspect of the invention there is provided a television receiver having means for receiving the sequence of samples and separating the samples originating from different lines, and interpolation means to estimate from the received samples the values of the omitted samples.

Embodiments of the invention will be further described by way of example with reference to the accompanying drawings, in which:

Figure 3 is a block diagram of a video encloder;

Figure 4 is a block diagram of a video decoder;

Figure 5 and 6 are diagrams illustrating subsampling and processes that may be performed by the encoder and decoder; and Figure 7 is a timing diagram illustrating one possible format of a MAC colour TV signal. The arrangements shown in figures 3 and 4 handle only luminance signals. It will be understood, however, that in a colour system the colour difference signals (or RGB signals) may be processed in a similar manner.

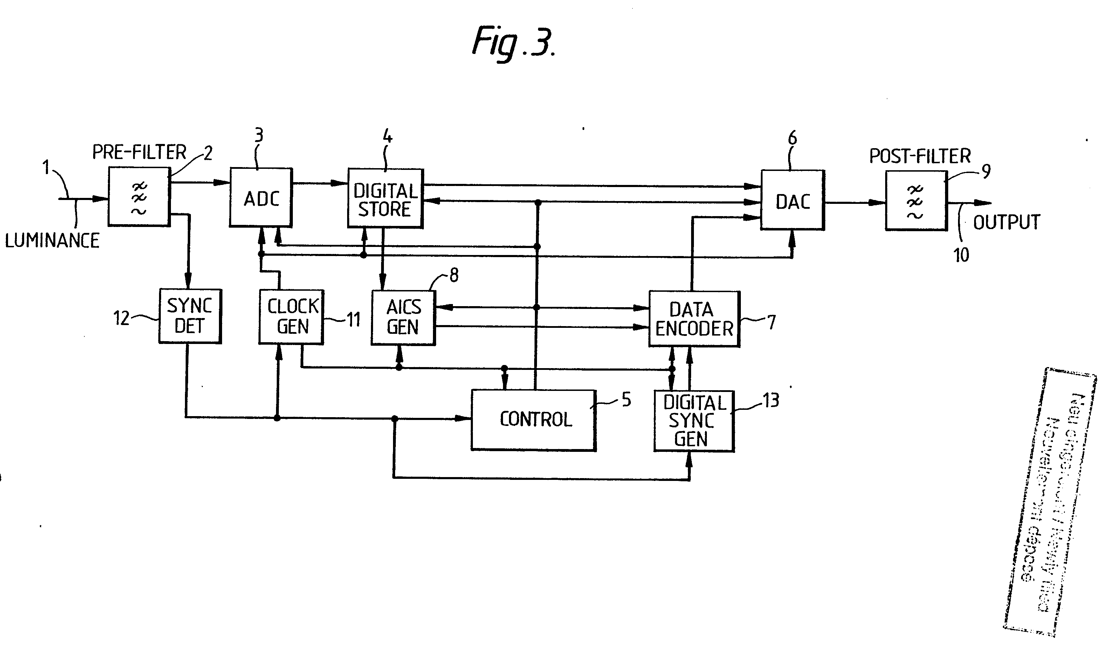

Figure 3 shows an encoder with a conventional video input 1, pre-filter 2, and analogue-to digital converter 3 which enters digital samples of the input signal into a digital store 4. A controller 5 controls storage, and more particularly the retrieval of the samples to be transmitted, in the appropriate sequence. These are supplied to a digital-to-analogue converter 6, which also receives, via a data encoder 7, the output of an adaptive interpolation control signal generator 8, whose control signals are, as will be seen below, inserted in the line blanking period of the transmitted signal. The d-to-a converter output is connected via a filter 9 to a signal output 10. A clock generator 11, and sync detector 12 and digital sync generator 13 are also shown.

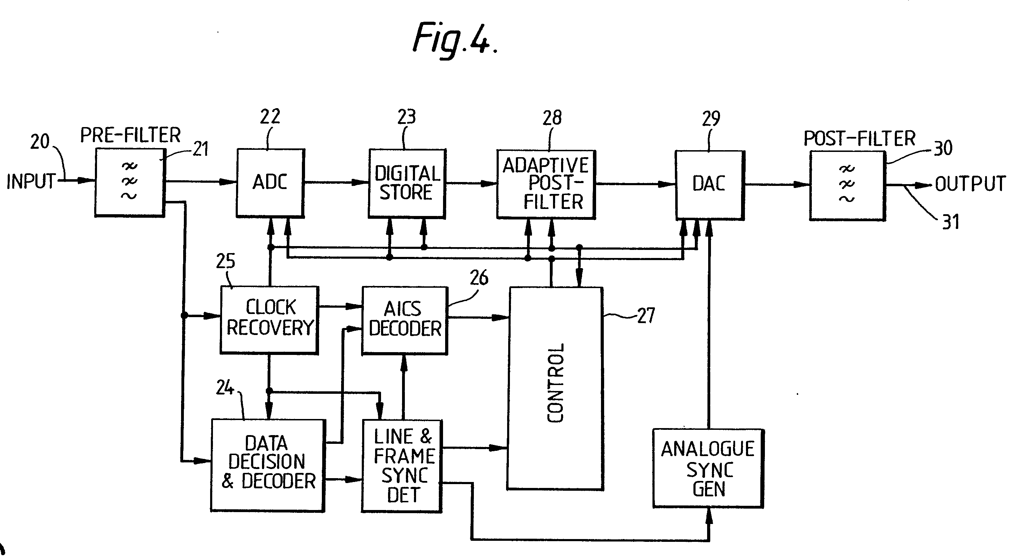

In the corresponding decoder (Figure 4), signals from the output 10 of the encoder are received (via a suitable transmission channel) at an input 20. After suitable filtering (21) the received video signal is processed by an analogue to digital converter 22 and the samples entered into a digital store 23. The interpolation control signals are separately extracted by data circutry 24 under control of clock recovery circuit 25 and decoded by a decoder 26. Read-out from the store 23 of samples corresponding to successive lines of the original video signal is effected by a control unit 27 which also controls an adaptive post filter (or interpolator) 28 which - in dependence on the control signals from decoder 26 - inserts estimated values for the samples omitted at the transmitter. The digital signals thus produced pass via a digital-to-analogue converter 29 and filter 30 to a video output 31.

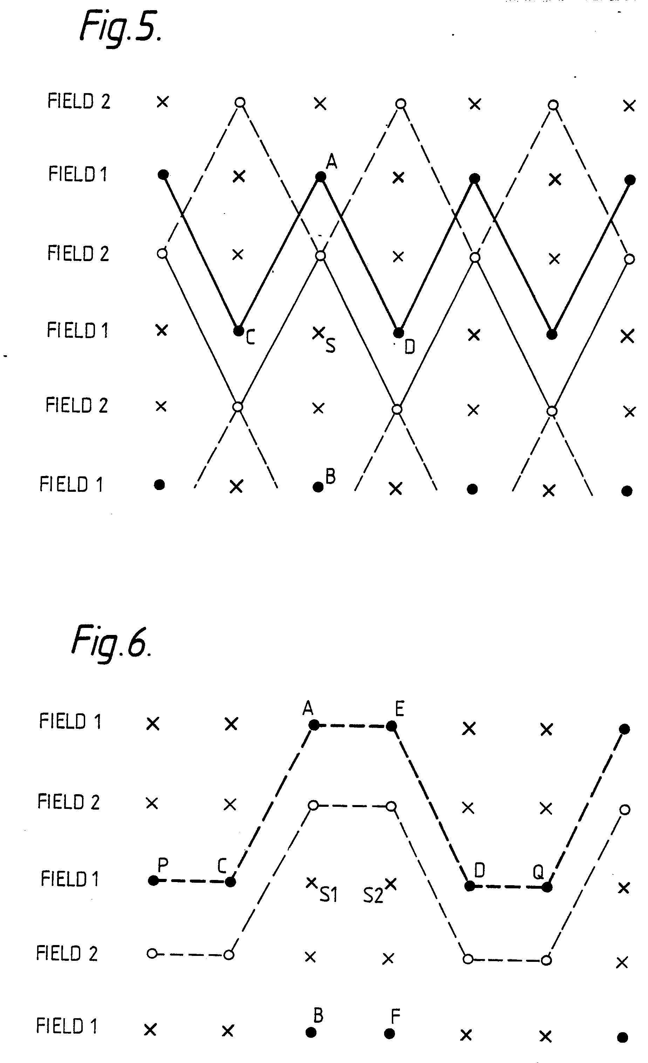

The sequence in which the samples are interleaved in the encoder (and, conversely, separated at the decoder) may be as illustrated by the diagonal lines in Figure 5 (using the same conventions as Figure 1). It may be desirable to change the phase of the sequence on alternate fields as indicated by the dotted lines for field 2.

Preferably, however, the subsampling shown in Figure 6 is employed. It can be seen that in the first line shown of Field 1, points A, E are transmitted whilst the adjacent pairs of points are omitted. In the following line, points S1, S2 are omitted whilst P, C, D, Q are transmitted.

The modified zig-zag scanning pattern is illustrated by the diagonal lines as before. It will be seen that zig-zag scanning of a horizontal edge results in a frequency of 1/4 of the sampling rate rather than half as previously, thereby reducing the degradation of horizontal edge detail resulting from channel bandwidth restriction. Again, there are two alternate phases for the next field.

As with the sampling of Figure 1, the omitted samples are estimated at the receiver by interpolation. Point S1 can be obtained by computing $(A+B+2C+D)/5$ whilst S2 uses $(E+F+C+2D)/5$. For stationary areas of picture the corresponding sample in the previous frame can be used instead, and for this reason the positions of the omitted and transmitted samples may alternate in alternate frames.

Adaptive interpolation is preferred; if switching between vertical and horizontal interpolation is desired, one can use:-

-for S1 $(A+B)/2$ or $(2C+D)/3$ according to picture content

-for S2 $(E+F)/2$ or $(C+2D)/3$ according to picture content

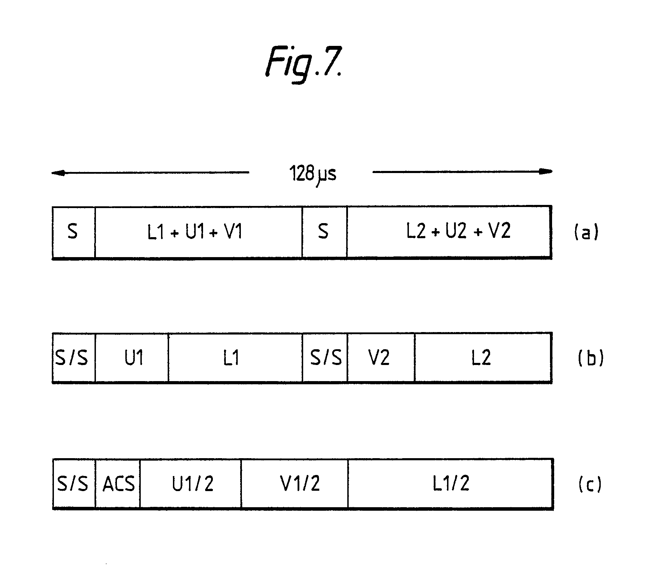

One particular application of the type of coding described is in multiplexed analogue component (MAC) coding of television signals. For comparison, Figure 7 shows (a) a conventional PAL signal over a two line period; each line consists of a synchronising pulse S, and luminance L1(L2) with colour difference signals U1(U2) and V1(V2) transmitted simultaneously on a sub-carrier; sound is transmitted continuously on a separate sub-carrier. In D2-MAC (row (b)) synchronisation and sound S/S are shown, whilst time compressed luminance L1, L2 on the two lines are preceded by time-compressed colour difference signals. These are subsampled vertically by deleting alternate lines (after pre-filtering) and transmitted alternately on successive lines - U1 on the first line and V2 on the second. Row (c) shows a proposal using the coding described above. Sync and sound (for the two lines are followed by the adaptive interpolation control signal. Of the remainder of the two-line period half is devoted to the interleaved luminance signal and a quarter each to the U and V signals which are similarly subsampled.

**Claims**

1 A television transmission apparatus including subsampling means operable to omit alternate pairs of consecutive picture samples in each line of a field, the omitted samples of each line being vertically above or below the non-omitted samples of the immediately adjacent line(s).

2 A television transmission apparatus according to claim 1 including means responsive to each omitted pair of samples and samples spatially adjacent thereto to generate an interpolation control signal.

3 A television transmission apparatus according to claim 1 or 2 arranged in operation to generate a signal consisting of pairs of samples of a line alternating with pairs of samples of an adjacent line.

4 A television transmission apparatus according to claim 3 arranged to produce an output signal which, during each two-line period of an input colour video signal, comprises a portion containing the said alternate pair signal representing a luminance component for the corresponding two lines, a portion containing the interpolation control signal, and portions containing chrominance signals in respect of the two lines.

5 A television transmission apparatus according to claim 4 in which the chrominance signals are each generated by subsampling means in accordance with claim 3.

6 A television transmission apparatus comprising means operable to omit alternate samples in each line of a field, the omitted samples of each line lying vertically above or below the non-omitted samples of the immediately adjacent lines, and generate a signal consisting of the samples from a line alternating with samples of an adjacent line, and means responsive to each omitted sample and samples spatially adjacent thereto to generate an interpolation control signal.

7 A television receiver for use with a transmission apparatus according to any one of the preceding claims, the television receiver having means for receiving the sequence of samples and separating the samples originating from different lines, and interpolation means to estimate from the received samples the values of the omitted samples.

8 A receiver according to claim 7 for use with a transmission apparatus according to claim 2, any one of claims 3 to 5 when dependent on claim 2, or claim 6, the interpolation means being controlled by the interpolation control signal.

9 A television transmission system comprising a transmission apparatus according to any one of claims 1 to 6 and a receiver according to claim 7 or 8.

## Fig.1.

| | | | | | | | |
|---|---|---|---|---|---|---|---|
| FIELD 1 | ● | × | ●A | × | ● | × | ● |
| FIELD 2 | ○ | × | ○ | × | ○ | × | ○ |
| FIELD 1 | × | ●C | ×S | ●D | × | ● | × |
| FIELD 2 | × | ○ | × | ○ | × | ○ | × |
| FIELD 1 | ● | × | ●B | × | ● | × | ● |

## Fig. 2.

| $F_1$ | $F_2$ | $F_1$ | $F_2$ | $F_1$ | $F_2$ | $F_1$ | $F_2$ |
|---|---|---|---|---|---|---|---|
| $F_2$ | $F_1$ | $F_2$ | $F_1$ | $F_2$ | $F_1$ | $F_2$ | $F_1$ |
| $F_1$ | $F_2$ | $F_1$ | $F_2$ | | | | |
| $F_2$ | $F_1$ | $F_2$ | $F_1$ | | | | |
| $F_1$ | $F_2$ | $F_1$ | | | | | |
| $F_2$ | $F_1$ | $F_2$ | | | | | |

# Fig.3.

0 259 004

# Fig.4.

INPUT

PRE-FILTER 21

22 ADC

23 DIGITAL STORE

28 ADAPTIVE POST-FILTER

29 DAC

POST-FILTER 30

OUTPUT 31

25 CLOCK RECOVERY

26 AICS DECODER

27 CONTROL

24 DATA DECISION & DECODER

LINE & FRAME SYNC DET

ANALOGUE SYNC GEN

0 259 004

## Fig.5.

## Fig.6.

## Fig.7.

← —————————— 128 μs —————————— →

| S | L1 + U1 + V1 | S | L2 + U2 + V2 | (a) |

| S/S | U1 | L1 | S/S | V2 | L2 | (b) |

| S/S | ACS | U1/2 | V1/2 | L1/2 | (c) |

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 114 693 (ROBERT BOSCH GmbH) <br> * Page 3, line 30 - page 10, line 21 * | 6-9 | H 04 N 7/12 <br> H 04 N 11/08 |
| | --- | | |
| A | US-A-4 323 916 (R. DISCHERT et al.) <br> * Column 2, line 1 - column 4, line 57 * | 1,6-9 | |
| | ----- | | |

| TECHNICAL FIELDS SEARCHED (Int. Cl.4) |
|---|
| H 04 N |

The present search report has been drawn up for all claims

| Place of search | Date of completion of the search | Examiner |
|---|---|---|
| THE HAGUE | 09-11-1987 | VERSCHELDEN J. |